# EUROPEAN PATENT APPLICATION

(11) **EP 4 835 816 A1**
(43) Date of publication of application: **04.11.2026**
(21) Application number: 25736198.0
(22) Date of filing: 02.01.2025
(51) Int. Cl.: G06T 7/41

(54) **TEXTURE SAMPLER, AND METHOD FOR REALIZING TEXTURE FEEDBACK**

(30) Priority: 02.01.2024 CN 202410006128
(71) Applicant: Moore Threads Technology Co., Ltd., Beijing 100036 (CN)
(72) Inventor: YE, Yixuan, Beijing 100036 (CN); YANG, Ying, Beijing 100036 (CN); LU, Hengya, Beijing 100036 (CN); LI, Kuan, Beijing 100036 (CN)
(74) Representative: Cabinet Beau de Loménie
(86) International application number: PCT/CN2025/070235
(87) International publication number: WO 2025/146097

(57) **Abstract**

Disclosed are a texture sampler, and a method for realizing texture feedback. The texture sampler comprises a texture address processing module and a texture filtering module. The texture address processing module samples at least one group of texels that are associated with pixels and located at one level of texture, wherein each group of texels comprise at least one texel. The texture address processing module transfers level information and coordinate information of the at least one group of texels to the texture filtering module. The texture filtering module compiles statistics on a region of a statistics block size in a texture space during each instance of compiling statistics, and the texture filtering module acquires a starting point of one of the at least one group of texels during each instance of compiling statistics, such that a statistics block has the same starting point as the corresponding group of texels, and the group of texels are included in the statistics block size. The texture filtering module compiles statistics at least once, and after each instance of compiling statistics, the texture filtering module returns the aligned block where the starting point of the statistics block is located, and returns a positional offset of the starting point of the statistics block relative to a starting point of the aligned block in which the starting point of the statistics block is located. Aligned blocks are densely arranged and aligned in a manner of fully covering the texture space.

## Description

This application claims priority to Chinese Patent Application No. 202410006128.2, filed January 2, 2024, and entitled "TEXTURE SAMPLER AND METHOD FOR REALIZING TEXTURE FEEDBACK", the entire contents of which are incorporated herein by reference.

### TECHNICAL FIELD

The present disclosure relates to a texture sampler for implementing texture feedback in a graphics processing unit (GPU), and also relates to a method and program for implementing texture feedback.

### BACKGROUND

The original execution process inside the GPU is that an internal processing module obtains normalized coordinates from an upstream module, calculates corresponding texture space coordinates and a texture level (mip level), acquires color data for corresponding texture coordinates from video memory, performs specified filtering calculations on the fetched texture colors, obtains a final sampled color and returns it, and finally, colors of all regions to be rendered are completely calculated and written into the video memory.

### SUMMARY

However, in a GPU, texture loading is dynamically updated for texture resources (tiled resources), and texture size may be very large. If a large number of textures that are not actually used are loaded, the occupancy rate of video memory will be greatly increased.

To solve the above problems, the present disclosure utilizes sampler feedback, which allows providing loading and usage conditions of each texture level of a texture during GPU texture sampling, and feeds back to a driver to help the driver know which textures and corresponding texture levels need to be preferentially loaded during the next texture loading.

According to one aspect of the present disclosure, a texture sampler is provided. The texture sampler includes a texture address processing module and a texture filtering module; wherein the texture address processing module samples at least one group of texels in one level of a texture associated with a pixel, each group of texels including at least one texel, and the texture address processing module transmits level information and coordinate information of the at least one group of texels to the texture filtering module; the texture filtering module configures a count block based on the level information and the coordinate information, and performs counting on a region of a count block size in a texture space each time; wherein the texture filtering module acquires a starting point of one group of texels from the at least one group of texels each counting operation, such that the count block shares the same starting point as a corresponding group of texels and the corresponding group of texels is contained with the count block size, and the texture filtering module performs counting at least once, and returns, in each counting operation, an aligned block where a starting point of the count block is located and a position offset of the starting point of the count block relative to a starting point of the aligned block where the starting point of the count block is located, wherein aligned blocks are densely arranged and aligned to fill the texture space.

According to another aspect of the present disclosure, a method for implementing texture feedback is provided. The method includes: issuing, by a texture shader, a sampler feedback command to a texture sampler, to return positions of at least one group of texels associated with a pixel in one level of a texture; receiving, by a texture address processing module of the texture sampler, the sampler feedback command, sampling at least one group of texels in the level with each group of texels including at least one texel, and transmitting level information and coordinate information of the at least one group of texels to a texture filtering module of the texture sampler; and configuring, by the texture filtering module, a count block based on the level information and the coordinate information, and performing counting on a region of a count block size in a texture space each time, wherein the texture filtering module acquires a starting point of one group of texels from the at least one group of texels during each counting operation, such that the count block shares the same starting point as a corresponding group of texels and the corresponding group of texels is contained within the count block size, and the texture filtering module performs counting at least once, and returns, in each counting operation, an aligned block where a starting point of the count block is located and a position offset of the starting point of the count block relative to a starting point of the aligned block where the starting point of the count block is located, wherein the aligned blocks are densely arranged and aligned to fill the texture space.

The present disclosure also provides a program for implementing a texture sampler and texture feedback, as well as a computer-readable storage medium including the program. According to another aspect of the present disclosure, a computer-readable storage medium is provided. The computer-readable storage medium has a computer program stored thereon, wherein the computer program, when executed by one or more processors, causes the one or more processors to perform the aforementioned method.

According to another aspect of the present disclosure, a chip is provided. The chip includes a programmable logic circuit and/or program instructions, wherein the chip is operated, and the chip is configured to perform the aforementioned method.

According to another aspect of the present disclosure, a computer device is provided. The computer device includes a processor and a memory having a computer program stored thereon, wherein the computer program, when loaded and executed by the processor, causes the processor to perform the aforementioned method.

According to another aspect of the present disclosure, a computer program product is provided. The computer program product includes a computer program which, when loaded and executed by a processor, causes the processor to perform the aforementioned method.

According to the present disclosure, the efficiency of sampler feedback is improved by directly feeding back the information of the texture coordinates and corresponding texture levels that need to be used. This can avoid unnecessarily occupying video memory and improve the utilization rate of video memory. Furthermore, according to the present disclosure, even in the case of sampling texels in different modes, it is only necessary to reuse the sampler feedback command to return the counting information of the count block, which can also reduce the number of additional returns and improve the operational efficiency.

### BRIEF DESCRIPTION OF DRAWINGS

FIG. 1 schematically illustrates a schematic block diagram of a GPU for implementing sampler feedback;
FIG. 2 schematically illustrates a schematic flowchart for implementing texture feedback according to the present disclosure;
FIG. 3 schematically illustrates a diagram of block distribution for returning sampled texels in a conventional mode;
FIG. 4 schematically illustrates a diagram of count block distribution for returning sampled texels according to the present disclosure;
FIG. 5 schematically illustrates a diagram of block distribution restored in a position-aligned mode;
FIG. 6 schematically illustrates a diagram of different levels of an original feedback map of a sampled texture to be updated;
FIG. 7 schematically illustrates a diagram of count block distribution under a first sampling mode;
FIGS. 8 and 9 schematically illustrate diagrams of count block distribution under a second sampling mode;
FIG. 10 schematically illustrates a diagram of count block distribution under a third sampling mode;
FIG. 11 schematically illustrates a diagram of count block distribution under a fourth sampling mode;
FIG. 12 schematically illustrates a diagram of count block distribution under the fifth sampling mode;
FIG. 13 schematically illustrates a diagram of different levels of an updated exemplary original feedback map of a sampled texture;
FIG. 14 schematically illustrates a diagram of an exemplary minimal original feedback map of a sampled texture; and
FIG. 15 schematically illustrates a flowchart of a method for implementing texture feedback according to some embodiments of the present disclosure.

### DETAILED DESCRIPTION

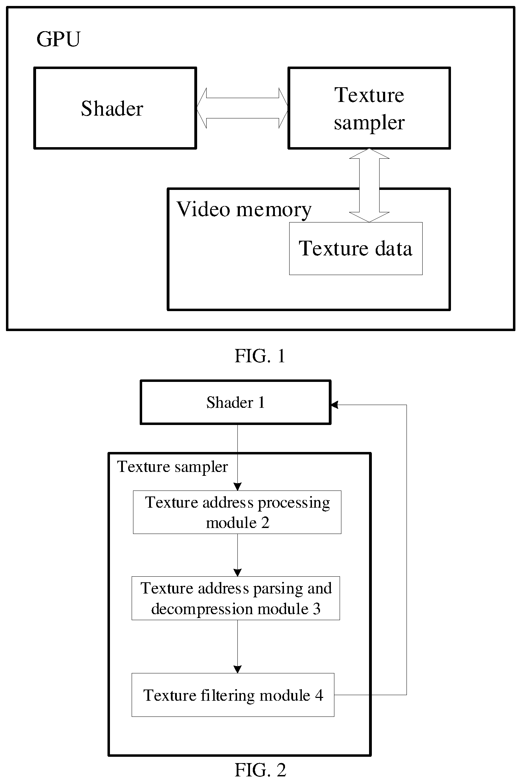

The present disclosure provides a scheme for implementing texture sampler feedback in a GPU. FIG. 1 illustrates a schematic block diagram of a GPU for implementing sampler feedback. When performing texture sampling on a texture, in order to determine the actual region using the texture and the corresponding texture level based on the pixels, a shader initiates sampler feedback, and achieves feedback through the texture sampler in a certain number of pixel cycles (e.g., 1, 2, 3...8 or more). The texture sampler calculates the associated address and texture size for each pixel, obtains information about the coordinates and texture level of the sampled texture, and feeds the coordinates and texture level of the sampled texture back to the shader. In some embodiments, the sampler feedback may be an SMP. footprint command. FIG. 2 illustrates a schematic flowchart for implementing the above process.

As depicted in FIG. 2, shader 1 issues a sampler feedback command to the texture sampler. For example, the shader 1 cyclically issues the SMP.footprint command to the texture sampler in units of 8 pixels until feedback is completed for all sampling points requiring sampler feedback.

In some embodiments, the sampler feedback command of the shader 1 may include the following information: normalized coordinates (u, v, s), a specified increased coordinate granularity of the texture space (region_size), addresses of texel groups and sub-addresses of the texel groups associated with pixels to be sampled (area_id, sub_area_id), a required level of detail (lod), positions of aligned blocks in the texture space of one level of the texture (blk_x, blk_y), a position offset between the starting point of a count block for performing counting on texel groups and the starting point of the aligned block where the count block is located (region_offset), position mask information of sampled texels in the texture space (regions_mask), and count parameters for returning positions of texel groups (area_count, sub_area_count). Herein, a texel is also referred to as a texture element, a texture pixel, or the like. An aligned block refers to a block of a specific size densely arranged and aligned to fill the texture space at a specified coordinate granularity, for example, at a texture space with increased coordinate granularity. Therefore, there is no gap between the aligned blocks and the aligned blocks do not overlap with each other, and all texels in the texture space can be covered. The count block, for example, is a block of a specific size used for counting the group of texels in the texture space with increased coordinate granularity. Herein, the first texture point of each group of texels may be regarded as the starting point of the group of texels, and one texel refers to a unit texel in the texture space with increased coordinate granularity. The size of the aligned block limits the number of texels sampled by the texture sampler each time. In some embodiments, the size of the aligned block may be selected as 8x4, having the same size as the count block. As long as at least one texel in the texture space with increased coordinate granularity covered by the count block needs to be sampled each time, the position in the corresponding 8x4 count block is marked (mask=1).

In some embodiments, each time the shader 1 receives feedback information from the texture sampler, it determines whether feedback for the current 8 pixels has been completed based on the feedback result. If the feedback has not been completed, the sampler feedback command is continuously issued in a loop. After the feedback for the 8 pixels is completed, the shader 1 continues to issue a next group of 8-pixel sampler feedback commands until sampler feedback for all pixels requiring feedback is completed.

In some embodiments, Shader 1 determines whether the sampler returns information for all texels associated with a given pixel in at least one texture level based on the parameters area_count and sub_area_count. When the feedback is provided a number of times corresponding to the return count determined by the parameters area_count and sub_area_count, it is determined that information for all texels associated with the given pixel in at least one texture level has been returned. Otherwise, it is determined that information for all texels associated with the pixel has not been returned. The parameters area_count and sub_area_count are explained later.

In another aspect, the texture sampler receives the command issued by the shader 1, and a texture address processing module 2 of the texture sampler determines the texels to be sampled according to the sampling mode. For example, depending on the sampling mode, the texture address processing module 2 may calculate the level of detail (lod), obtain lod_ratio based on the lod, and determine at least one level of the texture associated with the pixel (mip level 0, 1, 2, 3, ...). For example, when the lod is 0, there is one level of the texture associated with the pixel, and lod_ratio=1. When the lod is greater than 0, there are at least two levels of the texture associated with the pixel. For example, when lod=0.3, lod_ratio=2. For each determined level, the texture address processing module 2 may determine the texture space corresponding to such texture level according to the normalized coordinates issued by the shader 1, and sample at least one group of texels associated with the pixel within the texture space, where each group of texels may include one or more texels.

In some embodiments, the texture address processing module 2 may adopt anisotropic filtering (AF). In this case, the texture address processing module 2 may perform anisotropic filtering for one pixel, sample a plurality of groups of texels associated with the pixel in the texture space, and calculate the parameter AF_ratio that reflects the number of times the returned texel addresses are required due to the need to return a plurality of different groups of texels as a result of anisotropic filtering. For example, in the case of anisotropic filtering, the texture address processing module 2 samples the plurality of different groups of texels sequentially using sampling units, such that the addresses of the sampled texels can be determined and returned group by group.

In addition, in some embodiments, if the texture address processing module 2 samples in a repeat address mode, it indicates that a group of texels associated with the pixel may be distributed at the corners of the texture due to the address mode. In this case, it is necessary to calculate a repeat_ratio, which indicates the number of return times required to repeatedly acquire addresses for the group of texels at the corners of the texture. For example, in the case of repeating edges, if the sampled group of texels is distributed at the corners of the texture, it may be necessary to return addresses for each group of texels at the corners separately. Furthermore, in some embodiments, the number of times of return required for returning the addresses of a plurality of groups of texels associated with the pixel in at least one level of texture space may be counted, and address information may be returned to the shader 1 sequentially. The information reflecting the count may be (area_count, sub_area_count), where area_count may depend on, for example, lod_ratio and AF_ratio. lod_ratio is determined based on the level of detail lod, for example, when lod=0, lod_ratio=1; and for example, when lod=0.3, lod_ratio=2; AF_ratio reflects the number of times of returning required for returning a plurality of different groups of texels due to anisotropic filtering, for example, AF_ratio=1 when no anisotropic filtering is performed; AF_ratio may be an integer greater than 1 when anisotropic filtering is performed, for example, AF_ratio=8. Therefore, area_count may be represented as area_count=lod_ratio×AF_ratio. For example, when lod_ratio=1 and AF_ratio=8, area_count=8, and the sampled group of texels needs to be fed back 8 times in one level. sub_area_count reflects the number of times repeated feedback for texels at the corners that are scattered in the texture and cannot be fully covered by one count block size in the case of sampling in a repeat edge mode, and it may be represented as sub_area_count=repeat_ratio. For example, when sampled texels are scattered at all four corners of the texture space, sub_area_count=repeat_ratio=4, and 4 times of feedback are required. When feedback corresponding to the number of times of return determined based on the parameters area_count and sub_area_count is performed, information about all texels associated with a target pixel in all texture levels is returned.

Texel sampling in texture space may be completed for all levels of textures associated with the pixel. In some embodiments, the texture sampler may further include a texture address parsing and decompression module 3. The texture address parsing and decompression module 3 directly transmits the coordinate information and address count information (area_count, sub_area_count) sampled by the received texture address processing module 2 to the texture filtering module 4. The sampler feedback action described here is related to the description of one pixel. However, in practice, it may be necessary to transmit texture region coordinate information and count information related to a plurality of pixels (e.g., 8 pixels), which requires a large bandwidth. Through the texture address parsing and decompression module 3, the existing high-bandwidth interface between the texture address parsing and decompression module 3 and the texture address processing module 2 can be utilized to minimize interface modifications. The interface bandwidth between the texture address parsing and decompression module 3 and the texture filtering module 4 is also sufficient to transmit sampler feedback information for 8 pixels.

Here, at least one group of texels associated with a pixel may be composed of all texels associated with the pixel, or composed of only some of the texels associated with the pixel. In other words, the texels associated with a pixel may all be in one group of texels, or may be included in a plurality of groups of texels in a plurality of texture levels. For example, one texel associated with a pixel may form one group of texels. For another example, all texels associated with a pixel within the texture space of one texture level may form one group of texels.

After receiving the coordinate information and count information transmitted by the texture address parsing and decompression module 3, the texture filtering module 4, in order to return the position of the sampled texels to the shader 1, conventionally utilizes aligned blocks of the same size for position alignment in each level of texture space associated with the pixel in the texture. It counts the texels of the texture in the texture space in units of a certain block size. Since the aligned blocks are densely arranged and aligned to fill the texture space, the position of each aligned block in the texture space and the position of each texel within the aligned block can be determined. The texture filtering module 4 returns the position coordinates of the aligned block where the sampled texels are counted, and also returns the position corresponding to the sampled texels in the aligned block.

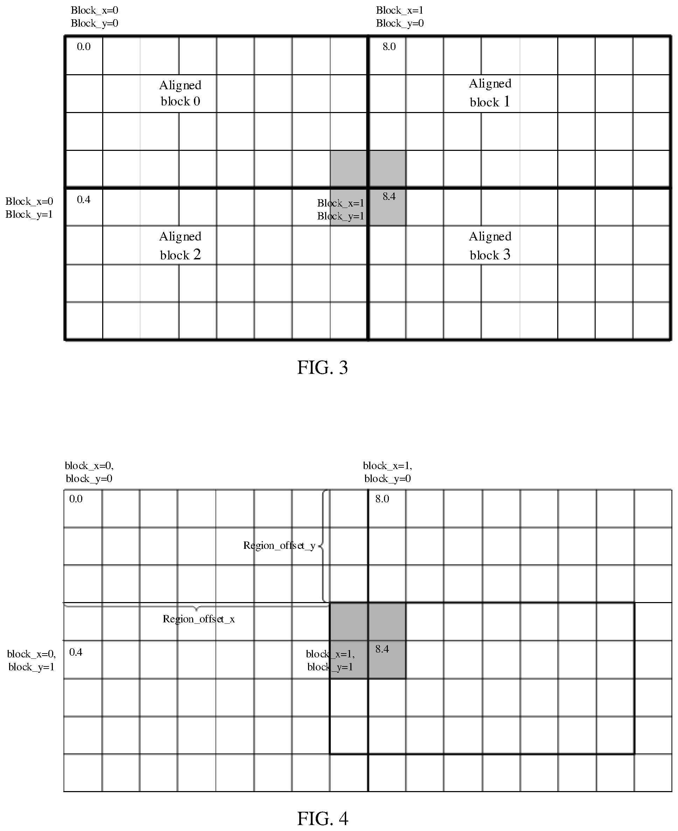

For example, as shown in FIG. 3, when a group of texels associated with a pixel is four texels marked in dark gray in the texture space, in the related art, in order to utilize aligned blocks of a size such as 8×4 to count this group of texels, it is necessary to return information for each of the four positionally aligned blocks: block 0, block 1, block 2, and block 3, including the position of the block (e.g., block_x=0, block_y=0; block_x=1, block_y=0; block_x=0, block_y=1; block_x=1, block_y=1) and the position of the sampled texel within the block. These positions are represented, for example, using position mask information (region_mask) for each block, where the position mask information indicates whether each counted texel in the block corresponds to the sampled texel. If yes, the counted texel is marked as 1 ("mask=1"). The position mask information is related to the block size and is, for example, 32-bit data in the case of an 8×4 size aligned block. The texture filtering module repeatedly returns block information until the positions of all sampled texels in this level are returned.

However, in the aforementioned case, based on the related art, each aligned block only performs counting on one texel within a group of texels associated with the pixel. Accordingly, information from four aligned blocks needs to be returned, resulting in poor performance.

The embodiments of the present disclosure avoid repeatedly returning the positions of sampled texels for a group of texels associated with a pixel. For example, as shown in FIG. 4, in the case of the above example, the texture filtering module 4 of the present disclosure acquires the starting point of a group of texels associated with the pixel (in the above example, four texels of 2×2, marked in dark gray), determines the aligned block where the starting point is located, and calculates the position offset of the starting point of the group of texels relative to the starting point of the aligned block. For example, in the case of FIG. 4, the texture filtering module 4 first determines the aligned block where the starting point of the group of texels of 2×2 is located, with the starting point being the first texture point at the top left vertex of the four dark gray texels. In the case of FIG. 4, this aligned block is an 8×4 block represented by the position block_x=0, block_y=0. Then, the texture filtering module 4 calculates the position offset region_offset_x=7, region_offset_y=3 of the starting point of the group of texels of 2×2 relative to the starting point (0,0) of the aligned block (block_x=0, block_y=0). Based on this, the texture filtering module 4 configures a count block with the same size as the aligned block, for example, an 8×4 size count block, which is marked in light gray in FIG. 4 and shares the same starting point as the group of texels of 2×2. Here, the size of the count block is configured to ensure that at least one group of texels is covered. For example, an 8×4 size count block is used to cover all four texels in the group of texels of 2×2. In this case, only the information of one count block with the starting point in the aligned block (block_x=0, block_y=0) with the starting point (0,0) and with the position offset (region_offset_x=7, region_offset_y=3) needs to be returned, which improves processing efficiency.

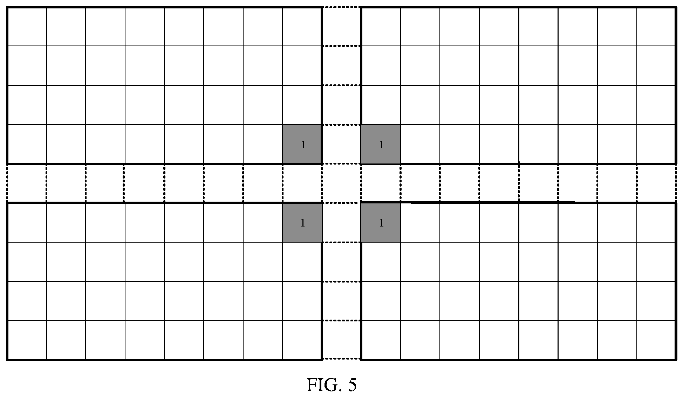

Since the 8×4 count block is not block-aligned and contains position offset information, after the shader 1 receives the texel positions associated with the pixel, as well as parameters such as area_count and sub_area_count returned by the texture filtering module 4, the count block is restored into four aligned blocks with 8×4 position alignment through calculation. Then, the region_mask of the four aligned blocks is combined by an OR operation to update the position mask information of the four position-aligned blocks. After restoration based on the count block information returned with reference to FIG. 4, as shown in FIG. 5, the group of texels associated with the pixel is restored into four position-aligned blocks in the texture level.

It should be noted that in order to more clearly illustrate the four restored aligned blocks, the four aligned blocks are separated by horizontal and vertical gaps in the middle of FIG. 5. However, this is only for the purpose of more clearly representing the restored aligned blocks, which are still aligned in position in reality. In each aligned block of FIG. 5, gray blocks marked with "1" are also used to indicate the texels associated with the pixel, indicating that the positions masked by the texels associated with the pixel are configured to 1 ("position mask=1").

In some embodiments, the shader 1 may also determine whether the current 8 pixels require additional iterations according to parameters such as area_count and sub_area_count returned by the texture sampler. If yes, the shader 1 cyclically issues sampler feedback commands until the sampling feedback for the pixel is fully completed, and then proceeds to issue the next 8-pixel command. After calculating all pixels of the current rendering target, the shader 1 may update levels of the original feedback map of the texture based on the calculation results, for example, using the preset coordinate granularity of the texture space.

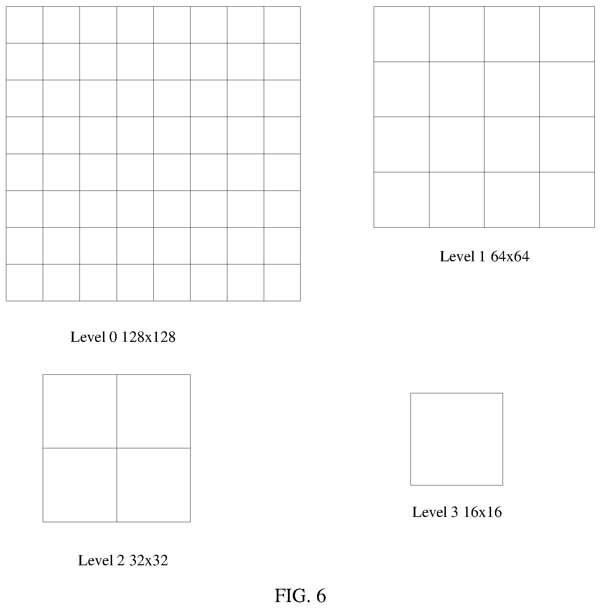

For example, in the case where the texture to be sampled is 128×128 in size and the texture space coordinate granularity is 16×16, the levels of the original feedback map that the shader 1 needs to be updated are shown in FIG. 6.

Hereafter, based on the context mentioned above, the solution of returning positions of at least one group of texels associated with a pixel of a texture by using count blocks according to the present disclosure will be described in further detail in connection with common texture sampling modes. It should be noted that although the shader 1 may issue sampler feedback commands to the texture sampler at the granularity of multiple pixels (e.g., 8-pixel granularity), for ease of description, only one pixel is taken as an example herein, and the process for other pixels is the same.

In some embodiments, firstly, the shader 1 issues a command to texture sampler SMP.footprint for pixels, and an example of the command is as follows:
SMP. footprint ( t#id, s#id, u, v, s, expected_region_size, 0, 0)

After receiving the SMP. Footprint command, the texture address processing module 2 calculates at least one group of sampled texels, and calculates area_count and sub_area_count to determine the number of returns. The calculation scenario is described by taking one pixel as an example, and the processes for other pixels are the same.

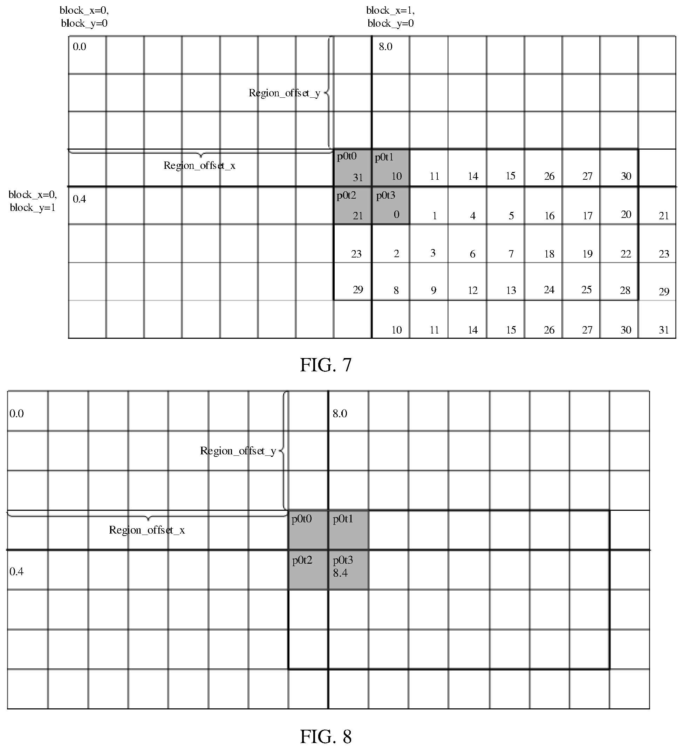

In some embodiments, the first sampling mode may be as follows: no trilinear filtering, no anisotropic filtering (AF), and no repeated edges, as shown in FIG. 7.

The texture address processing module 2 calculates and obtains lod=0, lod_ratio=1, AF_ratio = 1. area_count = lod_ratio× AF_ratio = 1, and sub_area_count=0. Taking pixel p0 as an example, four texels (p0t0, p0t1, p0t2, p0t3) associated with the pixel p0 and required to be sampled in the texture space are obtained based on the UV coordinates and are grouped as one group of texels, example positions of which are marked in dark gray in FIG. 7. The lod value, area_count, sub_area_count, and sampler feedback flag are sent to the texture address parsing and decompression module 3.

The texture address parsing and decompression module 3 transmits the sampler feedback data to the texture filtering module 4.

After receiving the information, the texture filtering module 4 acquires the starting point of the group of texels, determines the aligned block where the starting point is located, and calculates the position offset of the starting point of the group of texels relative to the starting point of the aligned block. For example, in the case of FIG. 7, the texture filtering module 4 first determines the aligned block where the starting point of the group of texels, namely the top left vertex of the four dark gray texels, is located. In the case of FIG. 7, this aligned block is an 8×4 block represented by the position block_x=0, block_y=0. Then, the texture filtering module 4 calculates the position offset (region_offset_x=7, region_offset_y=3) of the starting point of the group of texels relative to the starting point of the aligned block (block_x=0, block_y=0) (which is (0,0) in FIG. 7). The texture filtering module 4 further configures an 8×4 count block with the same starting point as the group of texels, which is marked in light gray in FIG. 7 and includes the group of dark gray texels. The texture filtering module 4 configures 32-bit position mask information (region_mask) for the count block according to the processes, and returns such information to the shader 1 together with the starting point of the count block in the aligned block with block_x=0, block_y=0, and the position offset (region_offset_x=7, region_offset_y=3) of the starting point of the count block relative to the aligned block. The region_mask information of the returned count block is presented as follows:

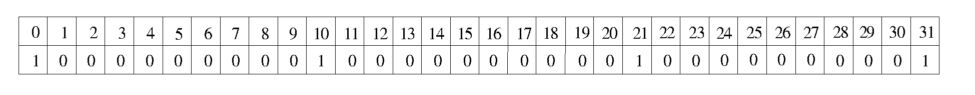

Therefore, since the counting information of the return count block can be achieved by reusing the sampler feedback command, and the number of additional returns is reduced, operational efficiency can be improved.

In some embodiments, the second sampling mode may be as follows: trilinear filtering, no anisotropic filtering, and no repeated edges, as shown in FIG. 8. The commands issued by the shader 1 are as follows.
SMP. footprint ( t#id, s#id, u, v, s, expected_region_size, 0, 0)

The texture address processing module 2 calculates and obtains lod=0.3, lod_ratio=2, AF _ratio = 1. area_count = lod_ratioxAF_ratio = 2. Taking p0 as an example, area_id=0, one group of texels (p0t0, p0t1, p0t2, p0t3) associated with the pixel p0 that need to be sampled in the first-level texture space are obtained based on the UV coordinates, example positions of which are marked in dark gray in FIG. 8. sub_area_count=0 is calculated. The lod value, area_count, sub_area_count, and sampler feedback flag are sent to the texture address parsing and decompression module 3.

The texture address parsing and decompression module 3 transmits the received data to the texture filtering module 4.

After receiving the information, the texture filtering module 4 acquires the starting point of the group of texels in a similar way to the first sampling mode, determines the aligned block where the starting point is located, and calculates the position offset (region_offset_x=7, region_offset_y=3) of the starting point of the group of texels relative to the starting point of the aligned block. Based on this, the texture filtering module 4 configures an 8×4 count block with the same starting point as the group of texels. In FIG. 8, the count block is marked in light gray and includes the dark gray group of texels. 32-bit position mask information is calculated according to the twiddle layout, and this information, along with area_count=2, the starting point of the count block located in the determined aligned block, and the position offset of the starting point of the count block relative to the starting point of the aligned block, is returned to the shader 1.

When the shader 1 receives an area_count=2 in response to area_id=0, it indicates that additional block information needs to be returned for the current pixel, and the shader 1 then issues a command with area_id=1 again.
SMP. footprint ( t#id, s#id, u, v, s, expected_region_size, 1, 0)

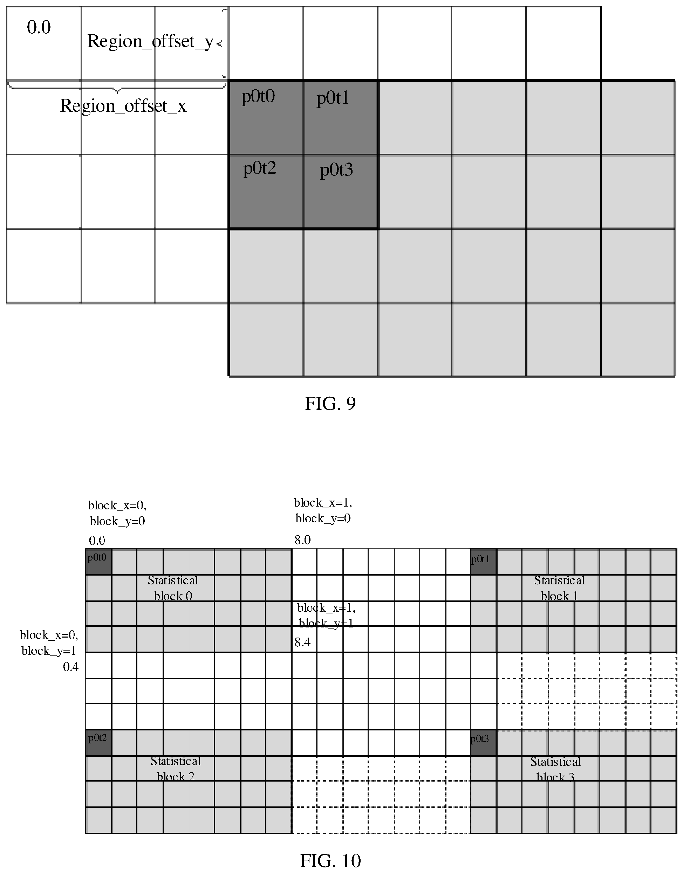

When area_id=1, the texture address processing module 2 calculates lod=0.3, lod_ratio=2, and AF_ratio=1. area_count = lod_ratio×AF_ratio = 2. Taking p0 as an example, at this time, area_id=1. Based on the UV coordinates, one group of texels (p0t0, p0t1, p0t2, p0t3) associated with the pixel p0 that needs to be sampled in the second-level texture space is obtained. These texels are marked in dark gray in FIG. 9. sub_area_count=0 is calculated. The lod value, area_count, sub_area_count, and sampler feedback flag are sent to the texture address parsing and decompression module 3. As shown in FIG. 9.

The texture address parsing and decompression module 3 transmits the received data to the texture filtering module 4.

After receiving the information, the texture filtering module 4 acquires the starting point of the group of texels (marked in dark gray) in the second-level texture space, determines the aligned block where the starting point is located, and calculates the position offset (region_offset_x=3, region_offset_y=1) of the starting point of the group of texels relative to the starting point of the aligned block. The texture filtering module 4 further configures an 8×4 count block with the same starting point as the group of texels in the second-level texture space. In FIG. 9, the count block is marked in light gray and includes the dark gray group of texels. 32-bit position mask information is calculated according to the twiddle layout, and this information, along with area_count=2, the starting point of the count block in the determined aligned block, and the position offset of the starting point of the count block relative to the determined aligned block, is returned to the shader 1.

Therefore, by reusing the sampler feedback command to return counting information of the count block, while also reducing the number of additional returns, the operational efficiency is improved.

In some embodiments, the third sampling mode may be represented as follows: repeated edges, no trilinear filtering, and no anisotropic filtering, as illustrated in FIG. 10. The commands issued by the shader 1 are as follows.
SMP. footprint ( t#id, s#id, u, v, s, expected_region_size, 0, 0)

When area_id=0, the texture address processing module 2 calculates lod=0, lod_ratio=1, AF_ratio=1, and area_count=lod_ratio×AF_ratio=1. Taking p0 as an example, area_id=0, one group of texels (p0t0, p0t1, p0t2, p0t3) associated with the pixel p0 that need to be sampled in the texture level are obtained based on the UV coordinates. Since (t1.u-t0.u>8) && (t2v-t0.v>4) for the p0, it indicates that as shown in FIG. 10, the current group of texels is distributed in four different 8×4 count blocks due to their location at the corners of the texture. One count block cannot cover all these texels, so each texel in the group needs to be counted as a group of texels. Therefore, three additional count block information is returned, and sub_area_count=3. The texture address processing module 2 determines that sub_area_count=3 and sub_area_id=0, and sends the UV coordinates of p0t0, with p0t1/p0t2/p0t3 coordinates cleared to 0, along with area_count, sub_area_count, and sampler feedback flag to the texture address parsing and decompression module 3. The distribution of texels is illustrated in FIG. 10.

The texture address parsing and decompression module 3 transmits the received data to the texture filtering module 4.

After receiving the information, the texture filtering module 4 configures a single texel p0t0 as a group of texels, which is marked in dark gray in FIG. 10. The texture filtering module 4 acquires the starting point of texel p0t0, determines the aligned block where the starting point is located (the 8×4 block with (0, 0) as the starting point in FIG. 10 (block_x=0, block_y=0)), and calculates the position offset of the starting point of texel p0t0 relative to the starting point of the aligned block. As can be seen from FIG. 10, the position offsets region_offset_x and region_offset_y are both 0 at this time. The texture filtering module 4 further configures an 8×4 count block 0 with the same starting point as texel p0t0, which is marked in light gray in FIG. 10 and includes texel p0t0. 32-bit position mask information is calculated according to the twiddle layout, and area_count=1, sub_area_count=3, along with the position mask information and the starting point of count block 0 in the aligned block (block_x=0, block_y=0) with the starting point (0, 0), as well as the position offset of the starting point of count block 0 relative to the starting point of the aligned block are returned to the shader 1.

When the shader 1 receives the input where area_id=0 and returns area_count=1 and sub_area_count=3, the shader 1 will issue commands for sub_area_id=1, 2, and 3 again. In this case, similar operations to those performed on p0t0 are performed on each of the remaining three groups of texels, p0t1, p0t2, and p0t3. For example, when sub_area_id=1, texture filtering module 4 acquires the starting point of the texel p0t1, determines the aligned block where the starting point is located (the 8×4 block (block_x=1, block_y=0) with (8, 0) as the starting point in FIG. 10), and calculates the position offset of the starting point of texel p0t1 relative to the starting point of the aligned block. As shown in FIG. 10, the position offset is region_offset_x=7 and region_offset_y=0. The texture filtering module 4 further configures an 8×4 count block 1 with the same starting point as texel p0t1, which is marked in light gray in FIG. 10 and includes texel p0t1. The texture filtering module 4 returns the positional mask information, the starting point of count block 1 in the aligned block (block_x=1, block_y=0) with the starting point (8, 0), and the position offset of the starting point of count block 1 relative to the starting point of the aligned block to the shader 1. When sub_area_id=2, the texture filtering module 4 acquires the starting point of the texel p0t2, determines the aligned block where the starting point is located (the 8×4 block (block_x=0, block_y=1) with (0, 4) as the starting point in FIG. 10), and calculates the position offset of the starting point of texel p0t2 relative to the starting point of the aligned block. As shown in FIG. 10, the position offset is region_offset_x=0 and region_offset_y=3. The texture filtering module 4 further configures an 8×4 count block 2 with the same starting point as texel p0t2, which is marked in light gray in FIG. 10 and includes texel p0t2. The texture filtering module 4 returns the position mask information, the starting point of count block 2 in the aligned block (block_x=0, block_y=1) with a starting point of (0, 4), and the position offset of the starting point of count block 2 relative to the starting point of this aligned block to the shader 1. When sub_area_id=3, the texture filtering module 4 acquires the starting point of texel p0t3, determines the aligned block where the starting point is located (the 8×4 block (block_x=1, block_y=1) with a starting point of (8, 4) in FIG. 10), and calculates the position offset of the starting point of texel p0t3 relative to the starting point of this aligned block. As shown in FIG. 10, the position offset is region_offset_x=7 and region_offset_y=3. The texture filtering module 4 further configures a count block 3 with the same starting point as texel p0t3, which is marked in light gray in FIG. 10 and includes texel p0t3. The texture filtering module 4 returns the position mask information, the starting point of count block 3 in the aligned block (block_x=1, block_y=1) with a starting point of (8, 4), and the position offset of the starting point of count block 3 relative to the starting point of this aligned block to the shader 1. In this way, only returning the information of the starting points of the four count blocks 0~3 within the corresponding four aligned blocks and the position offsets of the four count blocks 0~3 relative to the starting points of the corresponding aligned blocks can provide all the position information of the texels associated with pixel p0.

When duplicate edges occur, the texture address processing module 2 configures the required sub_area_count based on the interval of texture coordinates and the texel coordinates that need to be issued for the current sub_area_id. Table 1 below illustrates the coordinate issuance sequence of the texture address processing module 2 for different sub_area_counts.

**Table 1**

| t1.u-t0.u>8 | t2.v-t0.v> 4 | sub_area_count | sub_area_id | The texture address processing module 2 issues the texture element coordinates |
|---|---|---|---|---|
| TRUE | TRUE | 3 | cycle0 | p0t0=p0t0,p0t1=0,p0t2=0,p0t3=0 |
| | | | cycle1 | p0t0=p0t1,p0t1=0,p0t2=0,p0t3=0 |
| | | | cycle2 | p0t0=p0t2,p0t1=0,p0t2=0,p0t3=0 |
| | | | cycle3 | p0t0=p0t3,p0t1=0,p0t2=0,p0t3=0 |
| FALSE | TRUE | 1 | cycle0 | p0t0=p0t0,p0t1=p0t1,p0t2=0,p0t3=0 |
| | | | cycle1 | p0t0=p0t2,p0t1=p0t3,p0t2=0,p0t3=0 |
| TRUE | FALSE | 1 | cycle0 | p0t0=p0t0,p0t1=0,p0t2=p0t2,p0t3=0 |
| | | | cycle1 | p0t0=p0t1,p0t1=0,p0t2=0,p0t3=p0t3 |
| FALSE | FALSE | 0 | cycle0 | p0t0=p0t1,p0t1=p0t1,p0t2=p0t2,p0t3=p0t3 |

Since the counting information of the return count block can be obtained by reusing the sampler feedback command, the number of additional returns can be reduced, thereby improving the operational efficiency.

In some embodiments, the fourth sampling mode may be: repeated edges, trilinear filtering, and no anisotropic filtering. The commands issued by the shader 1 are as follows.
SMP. footprint ( t#id, s#id, u, v, s, expected_region_size, 0, 0)

When area_id=0, the texture address processing module 2 calculates lod=0.3, lod_ratio=2, AF_ratio = 1, and area_count = lod_ratio×AF_ratio = 2. Taking p0 as an example, area_id=0, one group of texels (p0t0, p0t1, p0t2, p0t3) associated with the pixel p0 that need to be sampled in the first-level texture space are obtained based on UV coordinates. Since (t1.u-t0.u>8) && (t2v-t0.v>4) for p0, sub_area_count = 3. The corresponding texel addresses, area_count, sub_area_count, and sampler feedback flag are sent to the texture address parsing and decompression module 3 according to sub_area_count and sub_area_id.

The texture address parsing and decompression module 3 transmits the received data to the texture filtering module 4.

After receiving the information, the texture filtering module 4 configures a single texel p0t0 as a group of texels, similar to the situation shown in FIG. 10, where the group of texels is marked in dark gray. The texture filtering module 4 acquires the starting point of the texel p0t0, determines the aligned block where the starting point is located, and calculates the position offset of the starting point of the texel p0t0 relative to the starting point of the aligned block, and configures the 8×4 count block 0 with the same starting point as the texel p0t0, similar to the situation shown in FIG. 10, where the count block is marked in light gray and includes the texel p0t0. 32-bit position mask information is calculated according to the twiddle layout, and area_count=1, sub_area_count=3, position mask information, along with the starting point of the count block 0, the aligned block (block_x=0, block_y=0) with the starting point (0, 0), and the position offset of the starting point of the count block 0 relative to the starting point of the aligned block are sent to the shader 1. The processing of other texels is the same as the third sampling mode.

When the shader 1 receives area_count=2, and sub_area_count=3 returned with area_id=0, the shader 1 issues commands with sub_area_id=1, 2, and 3 again.
SMP. footprint ( t#id, s#id, u, v, s, expected_region_size, 0, 1)
SMP. footprint ( t#id, s#id, u, v, s, expected_region_size, 0, 2)
SMP. footprint ( t#id, s#id, u, v, s, expected_region_size, 0, 3)

When sub_area_id= 1, 2, or 3, since area_id=0, the texture address processing module 2 behaves consistently with area_id=0, selecting and issuing the coordinates in the first-level texture space according to sub_area_id. After receiving the coordinates, the texture filtering module 4 determines the aligned block where the starting point of the texel is located, calculates the position offset of the starting point relative to the starting point of the aligned block, configures the count block where the starting point is the same as the starting point of the texel, and returns the starting point of the count block located in the determined aligned block, along with the position offset of the starting point of the count block relative to the starting point of the aligned block, and the position mask information to the shader 1.

When sub_area_id=sub_area_count, the shader 1 exits the loop and proceeds to issue the next area_id.
SMP. footprint ( t#id, s#id, u, v, s, expected_region_size, 1, 0)

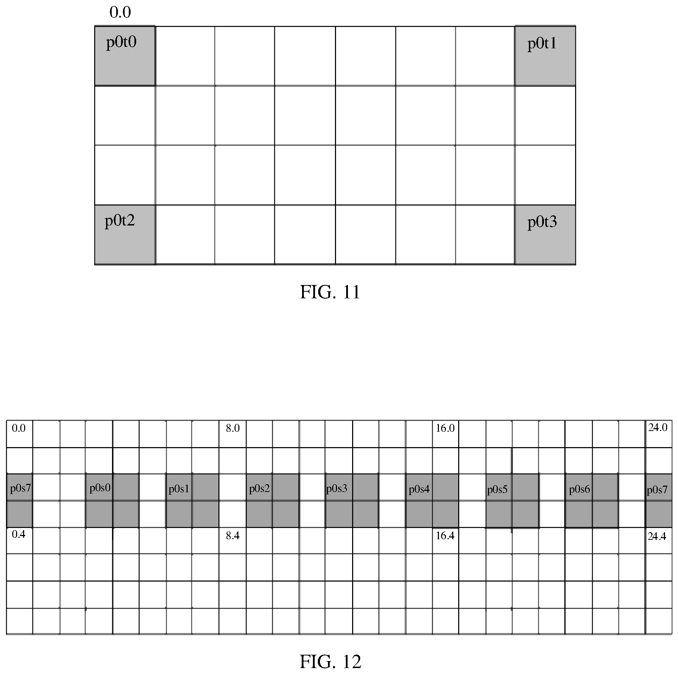

When area_id=1 and sub_area_id=0, the texture address processing module 2 calculates the coordinates of the second-level texture space and determines that the sub_area_count of the second-level texture space is 0. The texture address processing module 2 issues the coordinates and lod values of the second-level texture space. The distribution of coordinates is shown in FIG. 11. The group of texels (p0t0, p0t1, p0t2, p0t3) associated with the pixel in the second-level texture space is marked in dark gray in FIG. 11.

The texture filtering module 4 receives the information, configures a single texel p0t0 as a group of texels, acquires the starting point of texel p0t0 (marked in dark gray) in the second-level texture space, determines the aligned block where the starting point is located, and calculates the position offset of the starting point of texel p0t0 relative to the starting point of the aligned block (as shown in FIG. 11, both region_offset_x and region_offset_y are 0). The texture filtering module 4 further configures an 8×4 count block in the second-level texture space that shares the same starting point as the group of texels, and the count block is marked in light gray in FIG. 11 and includes texel p0t0. In this case, even if other texels p0t1, p0t2, and p0t3 are distributed at the corners of the texture, since this 8×4-sized count block can cover all texels p0t0, p0t1, p0t2, and p0t3, only the information of one count block is needed to be returned, which includes the starting point of the count block in the determined aligned block and the position offset of the starting point of the count block relative to the starting point of the aligned block. The 32-bit position mask information is calculated based on the twiddle layout, and this information, along with area_count=2 and the determined information of the count block, is returned to the shader 1.

Therefore, by reusing the sampler feedback command to return counting information of the count block, and reducing the number of additional returns, the operational efficiency is improved.

In some embodiments, the fifth sampling mode may be as follows: repeat edges, anisotropic filtering, and no trilinear filtering, as illustrated in FIG. 12. The commands issued by the shader 1 are as follows.
SMP. footprint ( t#id, s#id, u, v, s, expected_region_size, 0, 0)

When area_id=0, the texture address processing module 2 calculates lod_ratio=1 and AF_ratio=8x, and calculates area_count=lod_ratio×AF_ratio=8. Taking p0 as an example, with area_id=0, one group of texels p0s0 sampled by the sampling unit s0 in the texture space is first calculated, and sub_area_count=0 is calculated. The texture address processing module 2 sends the calculated texels, area_count, sub_area_count, and sampler feedback flag to the texture address parsing and decompression module 3. The coordinate distribution is shown in FIG. 12.

The texture address parsing and decompression module 3 transmits the sampler feedback data to the texture filtering module 4.

After receiving the information, the texture filtering module 4 acquires the starting point of the texel group p0s0, determines the 8×4 aligned block where the starting point is located (with (0, 0) as the starting point), and calculates the position offset of the starting point of the texel group p0s0 relative to the starting point of the aligned block (region_offset_x=3, region_offset_y=2). The texture filtering module 4 further configures an 8×4 count block with the same starting point as the texel group p0s0, which includes the texel group p0s0. The texture filtering module 4 calculates 32-bit position mask information according to the twiddle layout, and returns this information, along with area_count=8 and sub_area_count=0, as well as the starting point of the count block in the aligned block with the starting point (0, 0) and the position offset of the starting point of the count block relative to the starting point of the aligned block to the shader 1.

When the shader 1 receives area_count=8 returned with area_id=0, the shader 1 issues area_ids=1, 2, 3, 4, 5, 6, and 7 again.
SMP. footprint ( t#id, s#id, u, v, s, expected_region_size, 1-6, 0)

When area_id=1, 2, 3, 4, 5, or 6, the texture address processing module 2 calculates the texels sampled by each sampling unit s1, s2, s3, s4, s5, and s6 in sequence and sends the texels to the texture filtering module 4. The texture filtering module 4 determines the position offsets of the corresponding aligned blocks and 8×4 count blocks and returns area_count=8.
SMP. footprint ( t#id, s#id, u, v, s, expected_region_size, 7, 0)

When area_id=7, due to the presence of duplicate edges (texture pixels sampled on the leftmost and rightmost edges in FIG. 12), the sampling unit s7 of the texture address processing module 2 samples two groups of texture pixels, namely, one group at the left edge and one group at the right edge of FIG. 12. At this time, sub_area_count is calculated as 1, and area_count=8. The texture address processing module 2 first calculates the first group of texture pixels based on sub_area_id and sub_area_count, and sends the calculated first group of texture pixels, along with area_count, sub_area_count, and sampler feedback flag, to the texture address parsing and decompression module 3 and the texture filtering module 4.

After receiving the information, the texture filtering module 4 acquires the starting point of the first group of texels for p0s7, determines the aligned block where the starting point is located (starting at (24, 0)), and calculates the position offset of the starting point of the first group of texels relative to the starting point of the aligned block (region_offset_x=0, region_offset_y=2). The texture filtering module 4 further configures an 8×4 count block with the same starting point as the first group of texels, calculates 32-bit position mask information according to the twiddle layout, and returns the information, along with area_count=8 and sub_area_count=0, as well as the starting point of the count block in the aligned block with a starting point of (24, 0) and the position offset of the starting point of the count block relative to the starting point of the aligned block (region_offset_x=0, region_offset_y=2) to the shader 1.

When receiving sub_area_count > 0, the shader 1 issues a command again.
SMP. footprint ( t#id, s#id, u, v, s, expected_region_size, 7, 1)

The texture filtering module 4 acquires the starting point of the second group of texels of p0s7 according to the received command, determines the aligned block where the starting point is located (with (0, 0) as the starting point), and calculates the position offset (region_offset_x=0, region_offset_y=2) of the starting point of the second group of texels relative to the starting point of the aligned block. The texture filtering module 4 further configures an 8×4 count block with the same starting point as the second group of texels, and returns the starting point of the count block in the aligned block with the starting point (0, 0) and the position offset (region_offset_x=0, region_offset_y=2) of the starting point of the count block relative to the starting point of the aligned block in a similar way to the first group of texels of p0s7, ending the processing.

Therefore, by reusing the sampler feedback command to return counting information of the count block, and reducing the number of additional returns, the operational efficiency is improved.

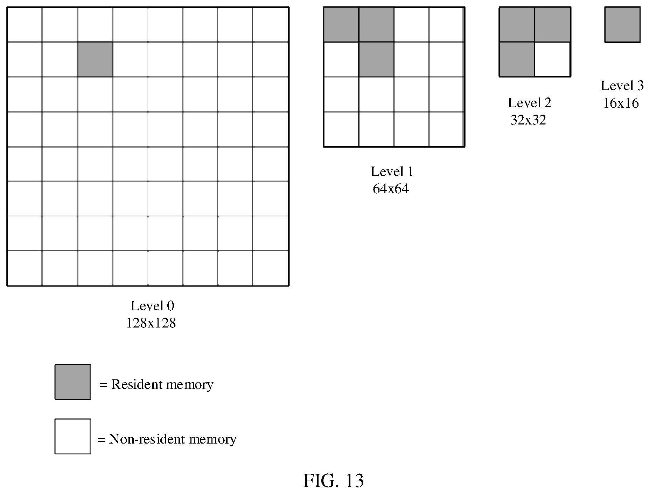

As described above, after completing the sampler feedback command SMP.footprint for all pixels, the shader 1 updates the levels of the original feedback map for each texture level. The updated results are shown in FIG. 13.

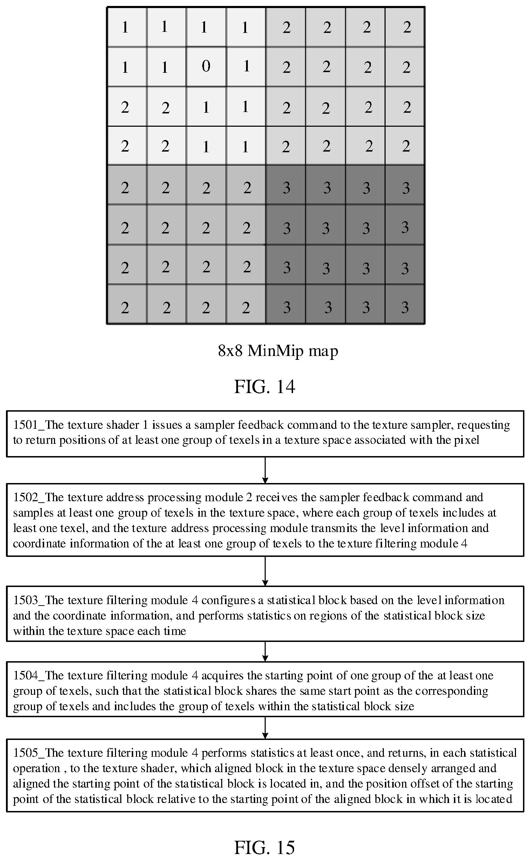

By providing this result to the driver, texture loading can be optimized. Furthermore, if a minimum map level (minmipmap) needs to be generated based on this, the GenerateMinmap function can be used to create the minimum map level of the texture. The results are shown in FIG. 14.

It should be noted that although the previous explanation was based on an example where the aligned block and count block have a size of 8×4, it is clear to those skilled in the art that such a size is merely an example, and any aligned block and count block sizes such as 4×4, 4×6, 5×5, 6×6, 6×8, 8×8, etc. may be adopted, as long as such sizes can cover one group of texels in the texture space.

In addition, according to the aforementioned third to fifth sampling modes, even if the texels associated with pixels are in a discrete state, the embodiments of the present disclosure can efficiently complete the counting of the sampled texels.

FIG. 15 is an example flowchart illustrating returning positions of sampled texels using a count block according to the present disclosure. As shown in FIG. 15, in 1501, the texture shader 1 issues a sampler feedback command to the texture sampler, requesting to return positions of at least one group of texels in a texture space of one level of a texture associated with the pixel. In 1502, the texture address processing module 2 of the texture sampler receives the sampler feedback command and samples at least one group of texels in the texture space, where each group of texels includes at least one texel, and the texture address processing module 2 transmits the level information and coordinate information of the at least one group of texels to the texture filtering module 4. In 1503, the texture filtering module 4 configures a count block based on the level information and the coordinate information, and performs counting on regions of the count block size within the texture space each time. In 1504, the texture filtering module 4 acquires the starting point of one group of texels from at least one group of texels, such that the count block shares the same starting point as the corresponding group of texels and includes the group of texels within the count block size. In 1505, the texture filtering module 4 performs counting at least once, and returns, in each counting operation, to the texture shader, which aligned block in the texture space densely arranged and aligned the starting point of the count block is located in, and the position offset of the starting point of the count block relative to the starting point of the aligned block in which it is located, thus completing the counting for all sampled texels in the texture space and returning the texel positions to the shader 1. Furthermore, for example, after the shader 1 confirms that the sampling of the current level of the texture is completed, similar processing as described above may be performed on other levels of the texture associated with the pixel, thus completing the sampling on all levels of the texture. In addition, for example, as described above for the texture address processing module 2 and the texture sampler 4, different sampling modes such as anisotropic filtering, repeated edge, and trilinear filtering may be adopted when sampling the texture, and counting is performed on the addresses of a plurality of groups of texels obtained under different sampling manners. Needless to say, the details described for the apparatus embodiments of the present disclosure are also applicable to the method embodiments for implementing the present disclosure.

In one or more examples, the described functionality may be implemented in hardware, software, firmware, or any combination thereof. If implemented in software, the functions may be stored on or transmitted over as one or more commands, instructions, or code on a computer-readable medium and executed by a hardware-based processing unit. The computer-readable medium may include a computer-readable storage medium corresponding to a tangible medium, such as a data storage medium, or a communication medium including any medium that facilitates transfer of a computer program from one place to another, such as a communication protocol. In this way, the computer-readable medium may generally correspond to (1) a tangible, non-transitory computer-readable storage medium, or (2) a communication medium such as a signal or carrier wave. The data storage medium may be any available medium that can be accessed by one or more computers or one or more processors to retrieve instructions, code, and/or data structures for implementing the implementations described in the present disclosure. A computer program product may include a computer-readable medium.

In addition, the embodiments of the present disclosure also provide a chip. The chip includes a programmable logic circuit and/or program instructions, wherein when the chip is operated, the chip is configured to perform the aforementioned method. Optionally, the chip may be a GPU chip or a graphics card.

In addition, the embodiments of the present disclosure also provide a computer device. The computer device includes a processor and a memory having a computer program stored thereon, wherein the computer program, when loaded and executed by a processor, causes the processor to perform the aforementioned method.

In addition, the embodiments of the present disclosure also provide a computer program product including a computer program, wherein the computer program, when loaded and executed by a processor, causes the processor to perform the aforementioned method.

The terms used in the description of the implementations herein are merely for the purpose of describing specific implementations and are not intended to limit the scope of the claims. As used in the description of the implementations and the appended claims, "a," "an," and "the " are also intended to include both singular and plural forms, unless the context clearly indicates otherwise. It will also be understood that the term "and/or" as used herein refers to and encompasses any and all possible combinations of one or more of the associated listed items. It will be further understood that the terms "include" and/or "comprise", when used in this specification, specify the presence of the stated features, elements, and/or components, but do not exclude the presence or addition of one or more other features, elements, components, and/or groups thereof.

The description of the present disclosure is provided for the purposes of illustration and description, and is not intended to be exhaustive or to limit the present disclosure to the form disclosed. Many modifications, variations, and alternative implementations will be apparent to those of ordinary skill in the art, benefiting from the teachings presented in the foregoing description and accompanying drawings. The embodiments are selected and described to best explain the principles of the present disclosure and practical applications, and to enable others skilled in the art to understand the present disclosure for various implementations, and to best utilize the basic principles and various implementations with various modifications as are suited to the particular use contemplated. Therefore, it is to be understood that the scope of the claims is not limited to the specific examples of the disclosed implementations, and that modifications and other implementations are intended to be included within the scope of the appended claims.

## Claims

1. A texture sampler, comprising a texture address processing module and a texture filtering module; wherein
the texture address processing module samples at least one group of texels in one level of a texture associated with a pixel, each group of texels comprising at least one texel, and the texture address processing module transmits level information and coordinate information of the at least one group of texels to the texture filtering module;
the texture filtering module configures a count block based on the level information and the coordinate information, and performs counting on a region of a count block size in a texture space each time; and
the texture filtering module acquires a starting point of one group of texels from the at least one group of texels during each counting operation, such that the count block shares the same starting point as a corresponding group of texels and the corresponding group of texels is contained within the count block size, and the texture filtering module performs counting at least once, and returns, in each counting operation, an aligned block where a starting point of the count block is located and a position offset of the starting point of the count block relative to a starting point of the aligned block where the starting point of the count block is located, wherein aligned blocks are densely arranged and aligned to fill the texture space.

2. The texture sampler according to claim 1, wherein all texels associated with the pixel are contained within one group of texels.

3. The texture sampler according to claim 1 or 2, wherein the texture address processing module samples in an anisotropic filtering mode, a trilinear filtering mode, or a combination of the anisotropic filtering mode and the trilinear filtering mode.

4. The texture sampler according to claim 3, wherein the texture address processing module samples in a repeated edge manner.

5. The texture sampler according to claim 4, wherein the at least one group of texels comprises a group of texels at a corner of the texture.

6. The texture sampler according to claim 5, wherein the number of times the texture filtering module returns count block information is determined by at least one of edge repetition, anisotropic filtering, and trilinear filtering.

7. The texture sampler according to claim 6, wherein the level is one of at least one level of the texture associated with the pixel, and the at least one level is determined by the texture address processing module through sampling in a trilinear filtering mode.

8. The texture sampler according to claim 7, wherein the texture address processing module instructs the texture filtering module to return the count block information for the at least one level.

9. The texture sampler according to claim 8, further comprising a texture address parsing and decompression module, wherein the texture address parsing and decompression module receives notifications and instructions from the texture address processing module and transmits the notifications and instructions to the texture filtering module.

10. A texture shader, configured to issue a sampler feedback command to the texture sampler as defined in any one of claims 1 to 9, wherein the sampler feedback command causes the texture sampler to return position information of one group of texels associated with the pixel in the texture space, the texture shader is further configured to repeatedly issue the sampler feedback command to obtain coordinates of texels associated with the pixel in at least one level of the texture in the texture space, and to use the coordinates to update at least one level of an original feedback map of the texture.

11. The texture shader according to claim 10, wherein the level of the at least one original feedback map is obtained by increasing the texture space coordinate granularity of a corresponding texture level at a specified ratio.

12. A method for implementing texture feedback, comprising:
issuing, by a texture shader, a sampler feedback command to a texture sampler, to return positions of at least one group of texels associated with a pixel in one level of a texture;
receiving, by a texture address processing module of the texture sampler, the sampler feedback command, sampling at least one group of texels in the level with each group of texels comprising at least one texel, and transmitting level information and coordinate information of the at least one group of texels to a texture filtering module of the texture sampler; and
configuring, by the texture filtering module, a count block based on the level information and the coordinate information, and performing counting on a region of a count block size in a texture space each time, wherein the texture filtering module acquires a starting point of one group of texels from the at least one group of texels during each counting operation, such that the count block shares the same starting point as a corresponding group of texels and the corresponding group of texels is contained within the count block size, and the texture filtering module performs counting at least once, and returns, in each counting operation, an aligned block where a starting point of the count block is located and a position offset of the starting point of the count block relative to a starting point of the aligned block where the starting point of the count block is located, wherein aligned blocks are densely arranged and aligned to fill the texture space.

13. The method according to claim 12, wherein the texture address processing module samples all texels associated with the pixel in one group of texels.

14. The method according to claim 12 or 13, wherein the texture address processing module samples in an anisotropic filtering mode, a trilinear filtering mode, or a combination of the anisotropic filtering mode and the trilinear filtering mode.

15. The method according to claim 14, wherein the texture address processing module samples in a repeated edge manner.

16. The method according to claim 15, wherein the at least one group of texels comprises a group of texels at a corner of the texture.

17. The method according to claim 16, wherein the texture address processing module determines the number of times the texture filtering module returns count block information according to at least one of edge repetition, anisotropic filtering, and trilinear filtering.

18. The method according to claim 17, wherein the level is one of at least one level of the texture associated with the pixel, and the texture address processing module determines the at least one level of the texture associated with the pixel by sampling in a trilinear filtering mode.

19. The method according to claim 18, wherein a texture address parsing and decompression module of the texture sampler receives notifications and instructions from the texture address processing module and transmits the notifications and instructions to the texture filtering module.

20. A computer-readable storage medium having a computer program stored thereon, wherein the computer program, when executed by one or more processors, causes the one or more processors to perform the method for implementing texture feedback as defined in any one of claims 12 to 19.

21. A chip, comprising a programmable logic circuit and/or program instructions, wherein the chip, when operated, is configured to perform the method for implementing texture feedback as defined in any one of claims 12 to 19.

22. A computer device, comprising a processor and a memory having a computer program stored thereon, wherein the computer program, when loaded and executed by the processor, causes the processor to perform the method for implementing texture feedback as defined in any one of claims 12 to 19.

23. A computer program product, comprising a computer program which, when loaded and executed by a processor, causes the processor to perform the method for implementing texture feedback as defined in any one of claims 12 to 19.
